# EUROPÄISCHE PATENTSCHRIFT

(11) **EP 4 047 281 B1**
(45) Veröffentlichungstag und Bekanntmachung des Hinweises auf die Patenterteilung: **10.04.2024**
(21) Anmeldenummer: 22157664.8
(22) Anmeldetag: 21.02.2022
(51) Int. Cl.: F24F 13/02, F16L 25/00, F16L 25/14, F16L 33/32

(54) **ROHRANSCHLUSSSTÜCK FÜR EIN LÜFTUNGSROHR**
PIPE FITTING FOR A VENTILATION PIPE
PIÈCE DE RACCORDEMENT DE TUBE POUR UN TUBE DE VENTILATION

(30) Priorität: 23.02.2021 CH 1872021
(43) Veröffentlichungstag der Anmeldung: 24.08.2022
(73) Patentinhaber: Zehnder Group International AG, 5722 Gränichen (CH)
(72) Erfinder: Pistorius, Gabriel, Meißenheim (DE); Wind, Michael, Malterdingen (DE)
(74) Vertreter: Rentsch Partner AG

(56) Entgegenhaltungen:
- WO-A1-2019/171243
- DE-A1- 3 302 450
- DE-U1-202011 003 955
- JP-A- 2002 144 846

## Beschreibung

### Technisches Gebiet

Die vorliegende Erfindung betrifft ein Rohranschlussstück für die Belüftungstechnik von Gebäuden, sowie eine Verwendung und ein Verfahren zur Herstellung eines solchen Rohranschlussstücks.

### Stand der Technik

In der Belüftungstechnik werden Rohre häufig mittels Steckverbindungen, wie z.B. Steckmuffen, miteinander verbunden oder an eine Lüftungskomponente angeschlossen. Um eine ausreichend feste und stabile Verbindung zu schaffen, werden Klemmen oder ähnliche Befestigungselemente verwendet, um das Rohr sicher mit einer Steckmuffe zu verbinden. Alternativ sind stoffschlüssige Verbindungen möglich, diese sind allerdings wegen der fehlenden Lösbarkeit weniger bevorzugt. In der Belüftungstechnik dienen die verwendeten Rohre der Zuführung und Abführung von warmer oder kalter Zuluft und Abluft in das, bzw. aus dem Gebäude. Um Störungen und Effizienzverluste zu vermeiden, muss sichergestellt werden, dass sämtliche Fluidpfade eine Lüftung fluiddicht abgeschlossen sind. Zur Erhöhung der Dichtigkeit bei Steckverbindungen werden beispielsweise Dichtungen, insbesondere Dichtungsringe verwendet.

Die JP 2002 144846 A offenbart eine Verbindungsstruktur für eine Luftleitung eine Klimaanlage eines Fahrzeugs.

Die DE 20 2011 003 955 U1 offenbart einen Adapter zum Anschluss von Luftleitungen an ein Lüftungsgerät, eine Luftverteileinrichtung und/oder dergleichen.

### Darstellung der Erfindung

Die im Stand der Technik bekannten Verbindungen sind häufig aufwendig in der Montage, da separate Befestigungselemente und/oder zusätzliche Montageschritte notwendig sind, um eine sichere und dichte Verbindung zu gewährleisten.

Es ist daher die allgemeine Aufgabe der vorliegenden Erfindung den Stand der Technik im Bereich der Rohrverbindungen in der Belüftungstechnik von Gebäuden weiterzuentwickeln und vorzugsweise die Nachteile des Stands der Technik ganz oder teilweise zu überwinden. In einem ersten Aspekt wird diese Aufgabe durch ein Rohranschlussstück zur Verbindung mit einem Lüftungsrohr gemäss dem unabhängigen Anspruch 1 gelöst. Ein solches Rohranschlussstück umfasst einen rohrförmigen Hohlkörper aus einem elastischen Polymerschaummaterial. Der Hohlkörper weist einen ersten Anschlussbereich auf, welcher dazu ausgelegt ist, ein Lüftungsrohr aufzunehmen, insbesondere peripher zu umschliessen. Der erste Anschlussbereich des rohrförmigen Hohlkörpers definiert dabei eine erste Anschlussöffnung. Zudem weist der erste Anschlussbereich eine umlaufende, d.h. die Longitudinalachse des ersten Aufnahmebereichs umlaufende, erste Innenrippe und eine umlaufende, d.h. die Longitudinalachse des ersten Aufnahmebereichs umlaufende, zweite Innenrippe auf. Die zweite Innenrippe ist dabei zwischen der ersten Innenrippe und der Anschlussöffnung, insbesondere entlang der, bzw. in Richtung der, Longitudinalachse des ersten Anschlussbereichs, angeordnet. Des Weiteren weist die erste Innenrippe eine grössere Höhe auf als die zweite Innenrippe. Die Anordnung der ersten und zweiten Innenrippe gewährleistet einerseits ein einfaches Einführen eines Lüftungsrohrs und führt andererseits zu einer festen, aber lösbaren Verbindung zwischen dem Lüftungsrohr und dem Rohranschlussstück. Zusätzliche Befestigungselemente zur Befestigung des Rohrs sind nicht notwendig.

Im Allgemeinen weist der erste Anschlussbereich eine Innenwand auf. Diese Innenwand umfasst eine Innenfläche. Der Fachmann versteht, dass die erste und zweite Innenrippe jeweils von der Innenwand radial nach Innen in Richtung der Longitudinalachse des ersten Anschlussbereichs ausgebildet ist. Die Höhe der jeweiligen Rippe ist dabei durch die maximale Erhebung der jeweiligen Innenrippe ausgehend von der ebenen Innenfläche gegeben. Der Begriff «grössere Höhe» ist dabei insbesondere derart zu verstehen, dass die erste und zweite Rippe derart konfiguriert sind, dass die erste Rippe aufgrund der grösseren Höhe einen festeren Formschluss und damit eine grössere Kraftwirkung auf ein Rohr mit konstantem Umfang ausüben kann, als die zweite Rippe.

Der Fachmann versteht unter dem Begriff «Rippe» eine längliche, sich von der an die Rippe anschliessende ebene Innenfläche des Rohranschlussstücks erhebende, Verstärkungsstruktur. Somit bildet eine Rippe eine Erhebung aus, wobei insbesondere sowohl die Rippe als auch die an die Rippe anschliessende ebene Innenfläche des Rohranschlussstücks von der Innenseite des Rohranschlussstücks aus zugänglich ist. Eine Rippe kann daher ein in die erste Anschlussöffnung eingeführtes Rohr kontaktieren. Zudem ist eine Rippe eine lokale Erhebung, d.h. vom Ort der maximalen Erhebung aus fällt die Rippe in beide Richtungen der Longitudinalachse ab auf das Niveau der ebenen Innenfläche des Rohranschlussstücks.

In einigen Ausführungsformen ist die Innenfläche des ersten Anschlussbereichs mit Ausnahme der ersten und zweiten Innenrippe flach ausgebildet. So kann die Innenfläche des ersten Anschlussbereichs mit Ausnahme der ersten und zweiten Innenrippe keine zusätzlichen Erhebungen aufweisen.

Die Longitudinalachse des ersten Anschlussbereichs ist typischerweise parallel zur Fluidströmungsrichtung und kann insbesondere senkrecht zur offenen Anschlussöffnungsebene angeordnet sein.

Die Anschlussöffnung kann unterschiedliche Formen oder Konturen aufweisen. Beispielsweise kann diese eine ovale, rechteckige, runde, insbesondere kreisrunde, Kontur aufweisen. Im Allgemeinen kann der erste Anschlussbereich im Querschnitt senkrecht zur Longitudinalhauptachse, bzw. zur Strömungsrichtung, ebenfalls eine ovale, rechteckige, runde, insbesondere kreisrunde, Kontur aufweisen. Hierbei kann die erste und zweite Innenrippe jeweils radial umlaufend ausgebildet sein.

Der rohrförmige Hohlkörper kann einen linearen Fluidpfad oder auch einen gebogen Fluidpfad definieren.

In einigen Ausführungsformen weist der erste Anschlussbereich nur genau zwei Rippen auf.

Das Rohranschlussstück kann in einigen Ausführungsformen mehrere Anschlussöffnungen aufweisen. Hierbei kann eine weitere Anschlussöffnung ebenfalls eine erste und/oder zweite Innenrippe aufweisen, oder aber rippenfrei ausgebildet sein.

Der Durchmesser der Anschlussöffnungen beträgt in einigen Ausführungsformen zwischen 50 mm und 150 mm, insbesondere zwischen 100 mm und 120 mm.

In einigen Ausführungsformen kann die durch die erste Anschlussöffnung, und optional jeder weiteren Anschlussöffnung, eine offene Gesamtfläche von 0.25 dm² bis 2 dm², insbesondere 0.5 dm² bis 1.5 dm², definiert werden.

In einigen Ausführungsformen weist die erste Innenrippe und die zweite Innenrippe jeweils eine minimale Höhe von 1.00 mm, insbesondere von minimal 1.50 mm, insbesondere von minimal 2.00 mm, insbesondere von minimal 2.30 mm, auf.

In einigen Ausführungsformen weist die erste Innenrippe und die zweite Innenrippe jeweils eine maximale Höhe von 4.00 mm, insbesondere von maximal 3.50 mm, insbesondere von maximal 3.00 mm, insbesondere von maximal 2.50 mm, auf. Eine derartige Rippenhöhe ist deswegen vorteilhaft, weil hierdurch das Rohranschlussstück einstückig, insbesondere mittels Formschäumen, hergestellt werden kann, ohne das besonders aufwendige Formwerkzeuge nötig sind, da die Rippen aufgrund der Verwendung eines elastischen Polymerschaums, aus dem das Rohranschlussstück hergestellt ist, elastisch nachgeben können, ohne dass sie beim Entformen beschädigt werden. Nach dem Entformen kehren die Rippen aufgrund der Elastizität des Materials wieder in die ursprüngliche gewünschte Form zurück.

In einigen Ausführungsformen weist die erste Innenrippe und die zweite Innenrippe jeweils eine Höhe von 1.00 mm bis 4.00 mm, insbesondere von 1.50 mm bis 3.50 mm, insbesondere von 2.00 mm bis 3.00 mm, insbesondere von 2.30 mm bis 2.80 mm, insbesondere von 2.30 mm bis 2.50 mm, auf. Kombiniert mit einer Anschlussöffnung mit einem Durchmesser und/oder offenen Gesamtfläche, wie obenstehend offenbart, ermöglichen derartige Rippenhöhen einerseits ein leichtes Einführen des Rohrs und gleichzeitig eine feste Verbindung des Rohrs mit dem Anschlussstück, ohne dass das Rohr unbeabsichtigt aus dem ersten Anschlussbereich herausrutschen kann.

In einigen Ausführungsformen beträgt der Unterschied zwischen der Höhe der ersten Innenrippe und der Höhe der zweiten Innenrippe zwischen 0.10 mm bis 1.00 mm, insbesondere zwischen 0.10 mm und 0.50 mm, insbesondere zwischen 0.15 mm und 0.30 mm. Ein derartiger Unterschied ist vorteilhaft, weil einerseits ein leichtes Einführen des Rohrs und gleichzeitig ein fester Halt des Rohrs im ersten Anschlussteil bereitgestellt wird.

In einigen Ausführungsformen beträgt der Abstand zwischen der zweiten Innenrippe und der ersten Anschlussöffnung 3 mm bis 10 mm, vorzugsweise 6 mm bis 8 mm. Durch die relative nahe Anordnung der zweiten Innenrippe relativ zur ersten Anschlussöffnung, wird die Einführung des Lüftungsrohrs erleichtert.

In einigen Ausführungsformen weist die die erste Innenrippe und die zweite Innenrippe im Querschnitt der Longitudinalachse des ersten Anschlussbereichs jeweils einen distalen und einen proximalen Steigungswinkel von jeweils weniger als 90°, insbesondere weniger als 80°, relativ zur Innenfläche des ersten Anschlussbereichs auf.

In einigen Ausführungsformen weist die die erste Innenrippe und die zweite Innenrippe im Querschnitt der Longitudinalachse des ersten Anschlussbereichs jeweils einen distalen und einen proximalen Steigungswinkel von jeweils 30° bis 55°, insbesondere von 40° bis 50°, insbesondere 45 °, relativ zur Innenfläche des ersten Anschlussbereichs auf. Typischerweise kann der laterale und der proximale Steigungswinkel der ersten Innenrippe gleich gross sein. In äquivalenter Weise kann der laterale und der proximale Steigungswinkel der zweiten Innenrippe gleich gross sein. Der Fachmann versteht, dass der proximale Steigungswinkel der ersten Rippe derjenige ist, welcher im Querschnitt entlang der Longitudinalachse des ersten Anschlussbereichs weiter von der Anschlussöffnung entfernt ist und der distale Steigungswinkel der ersten Rippe derjenige ist, der näher an der Anschlussöffnung angeordnet ist als der entsprechende proximale Steigungswinkel. Äquivalent dazu ist der proximale Steigungswinkel der zweiten Rippe derjenige, welcher im Querschnitt entlang der Longitudinalachse des ersten Anschlussbereichs weiter von der Anschlussöffnung entfernt ist und der distale Steigungswinkel der ersten Rippe derjenige, der näher an der Anschlussöffnung angeordnet ist als der entsprechende proximale Steigungswinkel. Derartige Steigungswinkel haben den Vorteil, dass insbesondere beim Formschäumen, ein Entformen während der Herstellung möglich ist, ohne dass es durch das Entformen zu einem Abreissen oder anderweitigen Beschädigung der gebildeten Innenrippen kommt und trotzdem eine feste Verbindung mit einem Rohr erreicht werden kann.

In einigen Ausführungsformen ist des Rohranschlussstück einstückig ausgebildet. Hierdurch wird im Vergleich zu einem mehrteiligen Anschlussstück einerseits eine schnellere und damit effizientere Fertigung ermöglich und andererseits wird das Auftreten von undichten Stellen verringert, sowie die strukturelle Stabilität des Rohranschlussstücks erhöht. Insbesondere kann das Rohranschlussstück durch Formschäumen hergestellt sein.

In einigen Ausführungsformen bildet der erste Anschlussbereich einen Rohranschlag zur Kontaktierung eines in die erste Anschlussöffnung eingeführten Lüftungsrohrs, insbesondere zur Kontaktierung des distalen Lüftungsrohrendes, aus. Der Rohranschlag kann dabei den ersten Anschlussbereich proximal begrenzen, während dieser distal durch die erste Anschlussöffnung begrenzt werden kann. Die erste und zweite Innenrippe sind dabei, insbesondere entlang der Longitudinalachse, zwischen dem Rohranschlag und der ersten Anschlussöffnung angeordnet. Der Fachmann versteht, dass ein Rohranschlag insbesondere eine Verengung des Querschnitts des Hohlkörpers umfassen kann.

In einigen Ausführungsformen weist der Rohranschlag entlang der Longitudinalachse des ersten Anschlussbereichs einen Abstand von 20 mm bis 40 mm, insbesondere von 25 mm bis 37 mm, insbesondere 25 mm bis 30 mm, zur ersten Innenrippe auf. Hierdurch wird ausreichend Platz für weitere Dichtungsanordnungen, wie z.B. einen Dichtungsring, bereitgestellt. Die Kombination eines Dichtungsrings und der erfindungsgemässen Rippenanordnung ist vorteilhaft, weil diese gemeinsam eine erhöhte Dichtung der Verbindung ermöglichen. Derartige Dichtungsringe können beispielsweise aus einem elastomeren Material, insbesondere mit hohen Haftreibungseigenschaften, hergestellt sein.

In einigen Ausführungsformen ist zwischen dem Rohranschlag und der ersten Anschlussöffnung ein Dichtungsbereich, insbesondere zur Anordnung eines Dichtungsrings, vorgesehen. Insbesondere kann der Dichtungsbereich zwischen dem Rohranschlag und der ersten Innenrippe angeordnet sein.

In einigen Ausführungsformen umfasst der rohrförmige Hohlkörper einen von dem ersten Anschlussbereich verschiedenen und eine zweite Anschlussöffnung definierenden, zweiten Anschlussbereich. Dieser kann dabei strukturell ähnlich oder identisch zum ersten Abschlussbereich sein. Der zweite Anschlussbereich ist dabei ebenfalls dazu ausgelegt ein Lüftungsrohr aufzunehmen, insbesondere peripher zum umschliessen. Ein derartiger zweiter Anschlussbereich weist eine umlaufende erste Innenrippe und eine zwischen der ersten Innenrippe und der zweiten Anschlussöffnung angeordnete, umlaufende zweite Innenrippe auf, wobei die erste Innenrippe eine grössere Höhe aufweist, als die zweite Innenrippe. Derartige Ausführungsformen sind beispielsweise vorteilhaft für das Verbinden zweier Lüftungsrohre.

Die erste Anschlussöffnung und die zweite Anschlussöffnung können dabei entweder gleich dimensioniert oder aber unterschiedlich dimensioniert sein. So können diese eine gleich grosse offene Gesamtfläche und/oder Durchmesser aufweisen, oder jedoch eine unterschiedlich grosse offene Gesamtfläche und/oder Durchmesser. Des Weiteren kann die Form der ersten und zweiten Anschlussöffnung gleich oder aber unterschiedlich sein.

Im Allgemeinen kann die erste Innenrippe und die zweite Innenrippe des zweiten Anschlussbereichs eines oder mehrere der hier beschriebenen Merkmale der ersten Innenrippe und der zweiten Innenrippe des zweiten Anschlussbereichs aufweisen.

In einigen Ausführungsformen ist der rohrförmige Hohlkörper aus expandiertem Polypropylen. Expandiertes Polypropylen hat den Vorteil eines geringen Gewichts, guter Stabilität und hoher Dichtigkeit.

In einigen Ausführungsformen ist das Young Modul des elastischen Polymerschaummaterials zwischen 200 und 500 MPa.

In einigen Ausführungsformen ist die Dichte des elastischen Polymerschaummaterials zwischen 55 g/l und 80 g/L, vorzugsweise zwischen 60 g/L und 70 g/L. Während zwar geringere Dichten von z.B. 40 bis 45 g/L zufriedenstellende Ergebnisse hinsichtlich der Dichtigkeit liefern, wird hierbei bei einem Fluiddruck von 250 Pa ein Ausströmungsfluss von 0.04 m³/h beobachtet und bei 1000 Pa ein Ausströmungsfluss von 0.12 m³/h. Hingegen wird bei eine Dichte von über 55 g/L, insbesondere bei 60 g/L bei einem Fluiddruck von 250 Pa ein Ausströmungsfluss von 0 m³/h und bei 1000 Pa ein Ausströmungsfluss von 0.01 m³/h beobachtet, ohne dass das Gewicht zu stark erhöht wird.

Gemäss einem zweiten Aspekt der Erfindung wird die allgemeine Aufgabe durch ein Verfahren zur Herstellung eines Rohranschlussstücks gemäss einer der hier beschriebenen Ausführungsformen durch Formschäumen gelöst. Das Verfahren umfasst dabei: Einfüllen eines Polymermaterials in ein Formwerkzeug, Formschäumen des Polymermaterials zur Ausbildung eines Rohranschlussstücks nach einer der hier beschriebenen Ausführungsformen und Entformen des formgeschäumten Rohranschlussstücks. Es versteht sich, dass das Formwerkzeug dabei derart ausgebildet ist, dass ein Rohranschlussstück gemäss der hier offenbarten Ausführungsformen hergestellt werden kann. So kann das Formwerkzeug beispielsweise eine rohrförmige Kavität mit zwei umlaufenden Rillen unterschiedlicher Tiefe aufweisen, welche der Ausbildung der ersten und zweiten Innenrippe des ersten Anschlussbereichs dienen.

Gemäss einem dritten Aspekt der Erfindung wird die allgemeine Aufgabe durch einen Teilesatz umfassend mindestens ein Rohranschlussstück nach einem der hier offenbarten Ausführungsformen und ein Lüftungsrohr, gelöst. Das Lüftungsrohr kann dabei insbesondere ein Wellenlüftungsrohr sein, was den Vorteil hat, dass die erste und zweite Innenrippe in umlaufend in das Wellenlüftungsrohr eingreifen können und dabei einen besseren Halt des Wellenlüftungsrohrs gewährleisten. Das Lüftungsrohr und/oder der erste Anschlussbereich sind dabei derart ausgebildet, dass das der erste Anschlussbereich das Lüftungsrohr aufnehmen, insbesondere peripher umschliessen, kann.

In einigen Ausführunsgformen kann der Teilesatz zusätzlich einen oder mehrere Dichtungsringe umfassen. Der eine oder die mehreren Dichtungsring sind dabei vorzugsweise derart konfiguriert, dass diese in dem Dichtungsbereich zwischen der ersten Anschlussöffnung und dem Rohranschlag angeordnet werden können.

Gemäss einem vierten Aspekt der Erfindung wird die allgemeine Aufgabe durch eine Verwendung eines Rohranschlussstück nach einem der hier offenbarten Ausführungsformen zur Ausbildung einer Rohrverbindung gelöst.

### Kurze Erläuterung der Figuren

Anhand der in den nachfolgenden Figuren gezeigten Ausführungsbeispielen und der dazugehörigen Beschreibung werden Aspekte der Erfindung näher erläutert.
- Figur 1: zeigt einen Querschnitt eines erfindungsgemässen Rohranschlussstücks gemäss einer Ausführungsform der Erfindung;
- Figur 2: zeigt eine perspektivische Ansicht eines erfindungsgemässen Rohranschlussstücks gemäss einer weiteren Ausführungsform der Erfindung;
- Figur 3: zeigt einen vergrösserten Ausschnitt der Innenrippen eines erfindungsgemässen Rohranschlussstücks gemäss einer Ausführungsform der Erfindung.

### Wege zur Ausführung der Erfindung

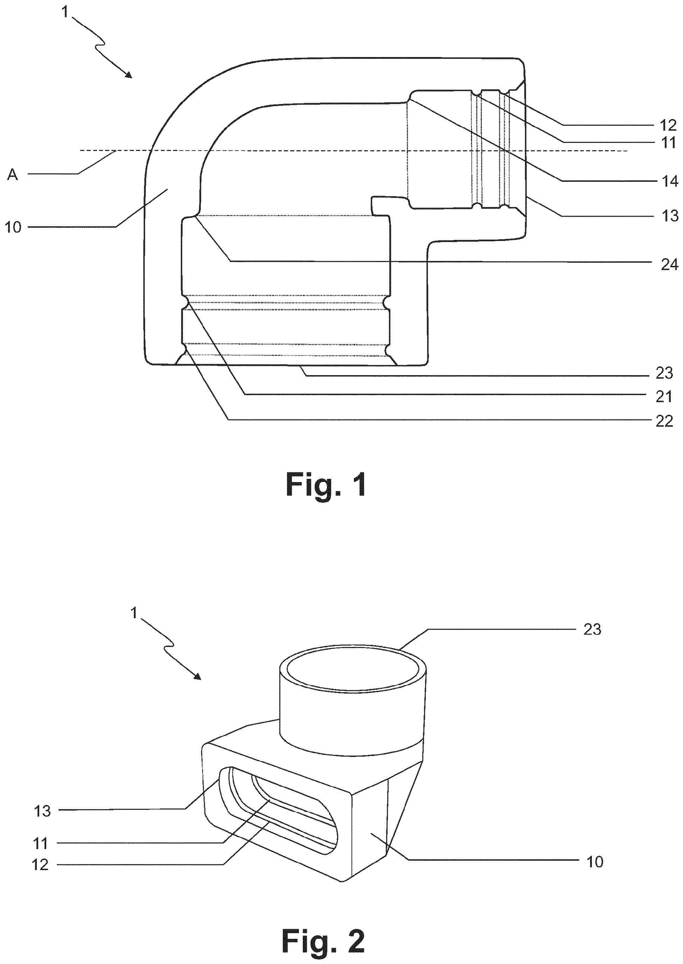

Figur 1 zeigt einen Querschnitt entlang der Longitudinalachse A eines Rohranschlussstücks 1 gemäss einer Ausführungsform der Erfindung. Das Rohranschlussstück 1 umfasst einen rohrförmigen Hohlkörper 10 aus einem elastischen Polymermaterial. Dieser weist einen ersten Anschlussbereich auf, welcher sich von der Anschlussöffnung 13 entlang seiner Longitudinalachse A bis zum Rohranschlag 14 erstreckt. Der erste Anschlussbereich weist dabei eine umlaufende erste Innenrippe 11 und eine umlaufende zweite Innenrippe 12 auf.

Die zweite Innenrippe 12 ist dabei entlang der Longitudinalachse A zwischen der ersten Innenrippe 11 und der Anschlussöffnung 13 angeordnet. Die Höhe der ersten Rippe 11, ist dabei grösser als die Höhe der zweiten Rippe 12. Das Rohranschlussstück 1 weist zudem den zweiten, von dem ersten Anschlussbereich verschiedenen und eine zweite Anschlussöffnung 23 definierenden, zweiten Anschlussbereich auf, welcher sich zwischen der zweiten Anschlussöffnung 23 und dem zweiten Rohranschlag 24 erstreckt. In der gezeigten Ausführungsform weit der zweite Anschlussbereich eine umlaufende erste Innenrippe 21 und eine zwischen der ersten Innenrippe 21 und der zweiten Anschlussöffnung 23 angeordnete, umlaufende zweite Innenrippe 22 auf, wobei die erste Innenrippe 21 eine grössere Höhe aufweist, als die zweite Innenrippe 22.

Figur 2 zeigt eine perspektivische Ansicht eines erfindungsgemässen Rohranschlussstücks 1 gemäss einer weiteren Ausführungsform der Erfindung. Dieses unterscheidet sich strukturell von der in Figur 1 gezeigten Ausführungsform durch eine unterschiedliche Kontur der ersten Anschlussöffnung 13. Zudem weist das Rohranschlussstück zwar einen zweiten Anschlussbereich mit der zweiten Anschlussöffnung 23 auf, jedoch weist dieser in der gezeigten Ausführungsform keine Rippen auf, ist also rippenfrei.

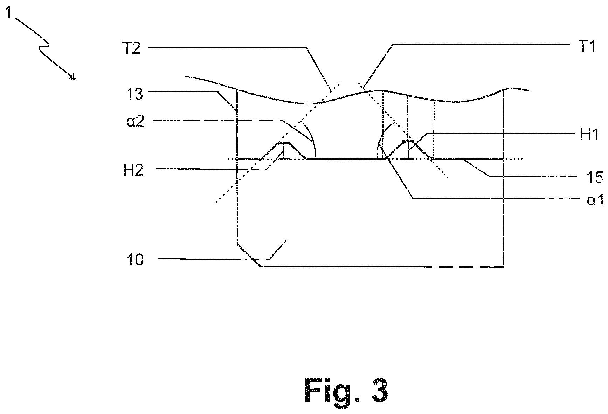

Figur 3 zeigt einen vergrösserten Ausschnitt eines ersten Anschlussbereichs mit der ersten Anschlussöffnung 13 eines erfindungsgemässen Rohranschlussstücks 1. Der erste Anschlussbereich weist dabei eine erste Innenrippe mit Höhe H1 und eine zwischen der ersten Innenrippe und der ersten Anschlussöffnung 13 angeordnete zweite Innenrippe mit Höhe H2 auf. Die Höhe H 1 ist dabei grösser als die Höhe H2. Zudem ist an der zweiten Innenrippe der jeweilige distale Steigungswinkel α2 eingezeichnet. Dieser wird im Allgemeinen zwischen der Innenfläche 15 der Innenwand und der an die angenäherte Tangente T2 definiert. Die Tangente T2 liegt in der vorliegenden Ausführungsform im Querschnitt an den Wendepunkt der zweiten Innenrippe an. An der ersten Innenrippe ist der jeweilige proximale Steigungswinkel α1 eingezeichnet. Dieser wird im Allgemeinen zwischen der Innenfläche 15 der Innenwand und der an die angenäherte Tangente T1 definiert. Die Tangente T1 liegt in der vorliegenden Ausführungsform im Querschnitt an den Wendepunkt der ersten Innenrippe an.

## Patentansprüche

1. Rohranschlussstück (1) zur Verbindung mit einem Lüftungsrohr, umfassend einer rohrförmigen Hohlkörper (10) aus einem elastischen Polymerschaummaterial umfassend einen eine erste Anschlussöffnung (13) definierenden ersten Anschlussbereich, welcher zur Aufnahme eines Lüftungsrohrs ausgelegt ist, wobei der erste Anschlussbereich eine umlaufende erste Innenrippe (11) und eine zwischen der ersten Innenrippe (11) und der Anschlussöffnung (13) angeordnete, umlaufende zweite Innenrippe (12) aufweist, wobei die erste Innenrippe (11) ein grössere Höhe aufweist als die zweite Innenrippe (12), wobei die erste Innenrippe (11) und die zweite Innenrippe (12) jeweils eine längliche, sich von der an die Innenrippe anschliessenden ebenen Innenfläche des Rohranschlussstücks erhebende Verstärkungsstruktur sind, wobei die erste Innenrippe (11) und die zweite Innenrippe (12) jeweils vom Ort der maximalen Erhebung aus in beide Richtungen der Longitudinalachse (A) des ersten Anschlussbereichs auf das Niveau der ebenen Innenfläche des Rohranschlussstücks abfallen.

2. Rohranschlussstück (1) nach Anspruch 1, wobei die erste Innenrippe (11) und die zweite Innenrippe (12) jeweils eine Höhe zwischen 1.00 mm und 4.00 mm, insbesondere zwischen 2.00 mm und 3.00 mm aufweist.

3. Rohranschlussstück (1) nach Anspruch 1 oder 2, wobei der Unterschied der Höhe der ersten Innenrippe (11) und der Höhe der zweiten Innenrippe (12) zwischen 0.10 mm bis 1.00 mm, insbesondere zwischen 0.15 mm und 0.30 mm, beträgt.

4. Rohranschlussstück (1) nach einem der vorherigen Ansprüche, wobei die erste Innenrippe (11) und die zweite Innenrippe (12) im Querschnitt der Longitudinalachse (A) des ersten Anschlussbereichs jeweils einen distalen und einen proximalen Steigungswinkel (α1, α2) von jeweils 30° bis 55°, insbesondere von 40° bis 50°, relativ zur Innenfläche (15) des ersten Anschlussbereichs aufweist.

5. Rohranschlussstück (1) nach einem der vorherigen Ansprüche, wobei das Rohranschlussstück (1) einstückig ausgebildet ist.

6. Rohranschlussstück (1) nach einem der vorherigen Ansprüche, wobei der erste Anschlussbereich einen Rohranschlag (14) zur Kontaktierung eines in die erste Anschlussöffnung (13) eingeführten Lüftungsrohrs ausbildet.

7. Rohranschlussstück (1) nach Anspruch 6, wobei der Rohranschlag (14) entlang der Longitudinalachse (A) des ersten Anschlussbereichs einen Abstand von 20 mm bis 40 mm, insbesondere von 25 mm bis 30 mm zur ersten Innenrippe (11) aufweist.

8. Rohranschlussstück (1) nach einem der Ansprüche 6 oder 7, wobei zwischen dem Rohranschlag (13) und der ersten Anschlussöffnung ein Dichtungsbereich, insbesondere zur Anordnung eines Dichtungsrings, vorgesehen ist.

9. Rohranschlussstück (1) nach einem der vorherigen Ansprüche, wobei der rohrförmige Hohlkörper (10) einen von dem ersten Anschlussbereich verschiedener und eine zweite Anschlussöffnung (23) definierenden, zweiten Anschlussbereich umfasst, welcher zur Aufnahme eines Lüftungsrohrs ausgelegt ist, wobei der zweite Anschlussbereich eine umlaufende erste Innenrippe (21) und eine zwischen der ersten Innenrippe (21) und der zweiten Anschlussöffnung (23) angeordnete, umlaufende zweite Innenrippe (22) aufweist, wobei die erste Innenrippe (21) eine grössere Höhe aufweist als die zweite Innenrippe (22), wobei die erste Innenrippe (21) und die zweite Innenrippe (22) jeweils eine längliche, sich von der an die Innenrippe anschliessenden ebenen Innenfläche des Rohranschlussstücks erhebende Verstärkungsstruktur sind, wobei die erste Innenrippe (21) und die zweite Innenrippe (22) jeweils vom Ort der maximalen Erhebung aus in beide Richtungen der Longitudinalachse des zweiten Anschlussbereichs auf das Niveau der ebenen Innenfläche des Rohranschlussstücks abfallen.

10. Rohranschlussstück (1) nach einem der vorherigen Ansprüche, wobei der rohrförmige Hohlkörper (10) aus expandiertem Polypropylen ist.

11. Rohranschlussstück (1) nach einem der vorherigen Ansprüche, wobei das elastischen Polymerschaummaterial eine Dichte von 55 g/L bis 80 g/L, insbesondere von 60 g/L bis 70 g/L, aufweist.

12. Verfahren zur Herstellung eines Rohranschlussstücks (1) nach einem der vorherigen Ansprüche durch Formschäumen umfassend: Einfüllen eines Polymermaterials in ein Formwerkzeug, Formschäumen des Polymermaterials zur Ausbildung eines Rohranschlussstücks nach einem der vorherigen Ansprüche und Entformen des formgeschäumten Rohranschlussstücks.

13. Teilesatz umfassend mindestens ein Rohranschlussstück (1) nach einem der Ansprüche 1 bis 11 und ein Lüftungsrohr, vorzugsweise ein Wellenlüftungsrohr, wobei das Lüftungsrohr und/oder der erste Anschlussbereich derart ausgebildet ist, dass das der erste Anschlussbereich das Lüftungsrohr aufnehmen kann.

14. Verwendung eines Rohranschlussstücks (1) nach einem der Ansprüche 1 bis 11 zur Ausbildung einer Rohrverbindung.

## Claims

1. Pipe connector (1) for connection to a ventilation pipe, comprising a tubular hollow body (10) made of an elastic polymer foam material comprising a first connection region defining a first connection opening (13), which is configured to receive a ventilation pipe, the first connection region having a circumferential first inner rib (11) and a circumferential second inner rib (12) arranged between the first inner rib (11) and the connection opening (13), wherein the first inner rib (11) has a greater height than the second inner rib (12), wherein the first inner rib (11) and the second inner rib (12) are each an elongate reinforcing structure rising from the plane inner surface of the pipe connector adjoining the inner rib, wherein the first inner rib (11) and the second inner rib (12) each descend from the location of the maximum elevation in both directions of the longitudinal axis (A) of the first connection region to the level of the plane inner surface of the pipe connector.

2. Pipe connector (1) according to claim 1, wherein the first inner rib (11) and the second inner rib (12) each have a height of between 1.00 mm and 4.00 mm, in particular between 2.00 mm and 3.00 mm.

3. Pipe connector (1) according to claim 1 or 2, wherein the difference between the height of the first inner rib (11) and the height of the second inner rib (12) is between 0.10 mm and 1.00 mm, in particular between 0.15 mm and 0.30 mm.

4. Pipe connector (1) according to one of the previous claims, wherein the first inner rib (11) and the second inner rib (12) in the cross-section of the longitudinal axis (A) of the first connection region each have a distal and a proximal angle of inclination (α1, α2) of 30° to 55°, in particular of 40° to 50°, relative to the inner surface (1 5) of the first connection region.

5. Pipe connector (1) according to one of the previous claims, wherein the pipe connector (1) is integrally formed.

6. Pipe connector (1) according to one of the previous claims, wherein the first connection region forms a pipe stop (14) for contacting a ventilation pipe inserted into the first connection opening (13).

7. Pipe connector (1) according to claim 6, wherein the pipe stop (14) has a distance of 20 mm to 40 mm, in particular of 25 mm to 30 mm from the first inner rib (11) along the longitudinal axis (A) of the first connection region.

8. Pipe connector (1) according to one of claims 6 or 7, wherein a sealing region, in particular for arranging a sealing ring, is provided between the pipe stop (13) and the first connection opening.

9. Pipe connector (1) according to one of the previous claims, wherein the tubular hollow body (10) comprises a second connection region which is different from the first connection region and defines a second connection opening (23) and which is configured to receive a ventilation pipe, wherein the second connection region has a circumferential first inner rib (21) and a circumferential second inner rib (22) arranged between the first inner rib (21) and the second connection opening (23), wherein the first inner rib (21) has a greater height than the second inner rib (22), wherein the first inner rib (21) and the second inner rib (22) are each an elongate reinforcing structure rising from the plane inner surface of the pipe connector adjoining the inner rib, wherein the first inner rib (21) and the second inner rib (22) each descend from the location of maximum elevation in both directions of the longitudinal axis of the second connection region to the level of the plane inner surface of the pipe connector.

10. Pipe connector (1) according to one of the previous claims, wherein the tubular hollow body (10) is made of expanded polypropylene.

11. Pipe connector (1) according to one of the previous claims, wherein the elastic polymer foam material has a density of from 55 g/L to 80 g/L, in particular from 60 g/L to 70 g/L.

12. Method for producing a pipe connector (1) according to one of the previous claims by mould foaming comprising: filling a polymer material into a moulding tool, mould foaming the polymer material to form a pipe connector according to one of the previous claims and demoulding the mould foamed pipe connector.

13. Kit of parts comprising at least one pipe connector (1) according to one of claims 1 to 11 and a ventilation pipe, preferably a corrugated ventilation pipe, wherein the ventilation pipe and/or the first connection region is configured such that the first connection region can accommodate the ventilation pipe.

14. Use of a pipe connector (1) according to any one of claims 1 to 11 for forming a pipe connection.

## Revendications

1. Pièce de raccordement de tuyau (1) pour la connexion à un tuyau de ventilation, comprenant un corps creux tubulaire (10) en un matériau de mousse polymère élastique comprenant une première zone de raccordement définissant une première ouverture de raccordement (13), qui est conçue pour recevoir un tuyau de ventilation, la première zone de raccordement présentant une première nervure intérieure périphérique (11) et une deuxième nervure intérieure périphérique (12) disposée entre la première nervure intérieure (11) et l'ouverture de raccordement (13), la première nervure intérieure (11) ayant une hauteur supérieure à celle de la deuxième nervure intérieure (12), la première nervure intérieure (11) et la deuxième nervure intérieure (12) étant chacune une structure de renforcement allongée s'élevant de la surface intérieure plane de la pièce de raccordement de tuyau qui se raccorde à la nervure intérieure, la première nervure intérieure (11) et la deuxième nervure intérieure (12) descendant chacune depuis l'endroit de l'élévation maximale dans les deux directions de l'axe longitudinal (A) de la première zone de raccordement jusqu'au niveau de la surface intérieure plane de la pièce de raccordement de tuyau.

2. Pièce de raccordement de tuyau (1) selon la revendication 1, dans laquelle la première nervure intérieure (11) et la deuxième nervure intérieure (12) présentent chacune une hauteur comprise entre 1,00 mm et 4,00 mm, en particulier entre 2,00 mm et 3,00 mm.

3. Pièce de raccordement de tuyau (1) selon la revendication 1 ou 2, dans laquelle la différence entre la hauteur de la première nervure intérieure (11) et la hauteur de la deuxième nervure intérieure (12) est comprise entre 0,10 mm et 1,00 mm, notamment entre 0,15 mm et 0,30 mm.

4. Pièce de raccordement de tuyau (1) selon l'une quelconque des revendications précédentes, dans laquelle la première nervure intérieure (11) et la deuxième nervure intérieure (12) présentent respectivement, dans la section transversale de l'axe longitudinal (A) de la première zone de raccordement, un angle d'hélice distal et un angle d'hélice proximal (α1, α2) compris chacun entre 30° et 55°, notamment entre 40° et 50°, par rapport à la surface intérieure (15) de la première zone de raccordement.

5. Pièce de raccordement de tuyau (1) selon l'une quelconque des revendications précédentes, dans laquelle la pièce de raccordement de tuyau (1) est réalisée en une seule pièce.

6. Pièce de raccordement de tuyau (1) selon l'une des revendications précédentes, dans laquelle la première zone de raccordement forme une butée de tuyau (14) pour établir le contact avec un tuyau de ventilation introduit dans la première ouverture de raccordement (13).

7. Pièce de raccordement de tuyau (1) selon la revendication 6, dans laquelle la butée de tuyau (14) présente le long de l'axe longitudinal (A) de la première zone de raccordement une distance de 20 mm à 40 mm, en particulier de 25 mm à 30 mm par rapport à la première nervure intérieure (11).

8. Pièce de raccordement de tuyau (1) selon l'une des revendications 6 ou 7, dans laquelle une zone d'étanchéité, notamment pour la mise en place d'une bague d'étanchéité, est prévue entre la butée de tuyau (13) et la première ouverture de raccordement.

9. Pièce de raccordement de tuyau (1) selon l'une quelconque des revendications précédentes, dans laquelle le corps creux tubulaire (10) comprend une deuxième zone de raccordement distincte de la première zone de raccordement et définissant une deuxième ouverture de raccordement (23), adaptée pour recevoir un tuyau de ventilation, la deuxième zone de raccordement comprenant une première nervure intérieure périphérique (21) et une deuxième nervure intérieure périphérique (22) disposée entre la première nervure intérieure (21) et la deuxième ouverture de raccordement (23), la première nervure intérieure (21) ayant une hauteur supérieure à celle de la deuxième nervure intérieure (22), la première nervure intérieure (21) et la deuxième nervure intérieure (22) étant chacune une structure de renforcement allongée s'élevant de la surface intérieure plane de la pièce de raccordement de tuyau adjacente à la nervure intérieure, la première nervure intérieure (21) et la deuxième nervure intérieure (22) descendant chacune de l'endroit de l'élévation maximale dans les deux directions de l'axe longitudinal de la deuxième zone de raccordement jusqu'au niveau de la surface intérieure plane de la pièce de raccordement de tuyau.

10. Pièce de raccordement de tuyau (1) selon l'une quelconque des revendications précédentes, dans laquelle le corps creux tubulaire (10) est en polypropylène expansé.

11. Pièce de raccordement de tuyau (1) selon l'une quelconque des revendications précédentes, dans laquelle le matériau de mousse polymère élastique présente une densité de 55 g/L à 80 g/L, en particulier de 60 g/L à 70 g/L.

12. Procédé de fabrication d'une pièce de raccordement de tuyau (1) selon l'une des revendications précédentes par moulage par moussage comprenant : le remplissage d'un matériau polymère dans un moule, le moulage par moussage du matériau polymère pour former une pièce de raccordement de tuyau selon l'une des revendications précédentes, et le démoulage de la pièce de raccordement de tuyau moulée par moussage.

13. Kit de pièces comprenant au moins une pièce de raccordement de tuyau (1) selon l'une des revendications 1 à 11 et un tuyau de ventilation, de préférence un tuyau de ventilation ondulé, le tuyau de ventilation et/ou la première zone de raccordement étant conçus de telle sorte que la première zone de raccordement peut recevoir le tuyau de ventilation.

14. Utilisation d'une pièce de raccordement de tuyau (1) selon l'une des revendications 1 à 11 pour former un raccord de tuyau.
